# EUROPEAN PATENT SPECIFICATION

(11) **EP 3 666 939 B1**
(45) Date of publication and mention of the grant of the patent: **30.10.2024**
(21) Application number: 19152387.7
(22) Date of filing: 17.01.2019
(51) Int. Cl.: D01D 5/20, D01D 1/09

(54) **A MULTIFILAMENT BUNDLE OF MELT SPUN POLYMER FILAMENTS**
EIN MULTIFILAMENT-BÜNDEL AUS GESCHMOLZEN POLYMER-FILAMENTEN
ENSEMBLE MULTIFILAMENT DE FILAMENTS DE POLYMERES FUSIONNES

(30) Priority: 12.12.2018 US 201862778722 P
(43) Date of publication of application: 17.06.2020
(73) Proprietor: Aladdin Manufacturing Corporation, Calhoun, GA 30701 (US)
(72) Inventor: CASCIO, Anthony, Calhoun, GA Georgia 30701 (US)
(74) Representative: Unilin Technologies

(56) References cited:
- JP-B2- 3 088 597
- US-A- 4 112 561
- US-A1- 2010 297 442

## Description

### Field of the invention

The present invention relates to filaments, strands and bundles of melt spun polymer filaments, and yarns and textile products comprising such, and methods to produce the same.

### Background of the invention

Melt spun filaments, such as melt spun filaments of PET are known in the art. Some types of polymers, hence filaments, strands or bundles, are difficult to dye, or to provide with a color varying along the length of the filament, bundle or strand;
US2010/297442A1 relates to a method and a device for producing a multi-colored composite thread made of a plurality of extruded colored filament bundles. A plurality of different dyed polymer melts is generated and extruded in parallel through a plurality of spinnerets to form the colored filament bundles. The colored filament bundles are brought together as a mixed color to form the composite thread. In order to generate a color pattern or to correct the mixed color of the composite thread, the generation of the dyed polymer melts is modified during the extrusion of the filament bundle in order to modify the mixed color of the composite thread.

### Summary of the invention

It is an object of the present invention to provide filaments, strands and bundles of melt spun polymer filaments, and yarns and textile products comprising such.

The invention is described by the appended claims. Independent claims 1, 7 and 8 describe the invention. The dependent claims describe preferred embodiments of the invention.

The invention relates to a multifilament bundle of melt spun polymer filaments, said bundle comprising at least two strands of filaments, wherein said bundle comprises at least one strand having a longitudinal axis, the strand titer varying along said axis, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer,
wherein the dyeability of the filaments of at least one of the strands differs from the dyeability of the filaments of the other strands.

According to a first aspect of the disclosure, a strand of melt spun polymer filaments is provided, the strand having a longitudinal axis, the strand titer varying along said axis, each filament of said strand having a filament titer, which along said axis, varies with the strand titer.

According to some embodiments, each filament of the strand may have a filament titer, which along said axis, i.e. along its length, varies proportionally with the titer of said strand.

It is understood that the variation of the strand titer, and the accompanying variation of the filament titers, are beyond the normal production variations. The variation of the strand titer in normal production circumstances is typically less than 5% of the average strand titer. In line with this, the variation of the filament titer in normal production circumstances is typically less than 5% of the average filament titer.

With the titer is meant the linear density of the product, be it a strand, a filament, a bundle of strands or a yarn. The titer expressed as Tt, i.e. in tex (g/km), or as Td, i.e. in denier (g/9km). For filaments present in a strand, bundle or yarn, "dpf" stands for denier per filament present in the strand, bundle or yarn.

The strand of filaments is the group of filaments which are spun out via the spinneret of the spin pack and quenched. The spin pump provides the molten polymer in the spin pack. By varying the volume pumped by the spin pump in function of time, the filament, hence strand titer is varied over time, and hence along the length or axis of the strand.

According to some embodiments, the titer of the strand may vary cyclically along said longitudinal axis.

According to some embodiments, the titer of the strand expressed in function of the position along said longitudinal axis may vary according to a sinusoidal function.

According to some embodiments, the titer of the strand in function of the position along said longitudinal axis may vary stepwise.

This stepwise varying of the strand and filament titers, can be cyclic or non-cyclic, i.e. at random.

According to the invention, at least one strand of the multifilament bundle has an average strand titer along its length, said strand titer varying between a minimum strand titer and a maximum strand titer, the difference between the minimum strand titer and maximum strand titer is in the range of 5 to 80 % of the average strand titer.

More preferred, the difference between the minimum strand titer and maximum strand titer is in the range of 10 to 80% of the average strand titer, and most preferred in the range of 40 to 80%, e.g. in the range of 40 to 60%.

Though feasible outside this range of 5 to 80 %, the magnitude of variation being larger than the maximal variation, will cause rapid speed changes to the pump. When the magnitude of variation is beyond the minimum variation, the visual effect of changing titers of the filaments, hence strand will be insufficient and rather invisible in the bundle of filaments and yarns made using strands according to the first aspect of the invention.

Preferably, the minimum and maximum strand titer is in the range of (1-0.8)*Ts and (1+0.8)*Ts, where Ts is the average strand titer. More preferred, the minimum and maximum strand titer is in the range of (1-0.6)*Ts and (1+0.6)*Ts.

According to some embodiments, each of the filaments may have an average filament titer in the range of 2 to 30 denier.

More preferred, the average filament titer is in the range of 3 to 16 denier.

According to some embodiments, the strand may comprise 8 to 150 filaments

More preferred, the strand may comprise 17 to 120 filaments.

According to some embodiments, the polymer of the filaments may be solution dyed polymer.

According to some embodiments, the polymer may be chosen from the group consisting of polyamides, polyesters and polyolefins.

The polymer may be aromatic or aliphatic polyamide, such as PA6, PA66, PA10, PA12, PA56, PA610, PA612, PA510. The polyamide can be a polyamide blend (copolymer) or homopolymer or partially recycled or fully based upon recycled polyamide.

The polymer may be polyester, such as polyethylene terephthalate (PET) or polytrimethylene terephthalate (PTT). The PET can be virgin PET or partially or fully based upon recycled PET. Such PET is described in e.g. US8597553.

The polymer may be a polyolefin, such as polyethylene (PE), polypropylene (PP),

Most preferred, the polymer is PET, PTT, PP, PA6, PA66 or PES.

According to some embodiments, the cross section of the filaments of the bundle may be circular, trilobal, elliptic, or may have any know cross section.

The crystallinity of each of the filaments of the strand may be substantially uniform along the length, i.e. along its axis, of the filament. Along a cross section of the strand, the crystallinity of the filaments of the bundle may be substantially uniform.

According to a second aspect of the disclosure, which is according to the claimed invention, a bundle is provided the bundle comprising at least two strands of filaments, wherein said bundle comprises at least one strand according to the first aspect of the invention.

According to some embodiments, the bundle may comprise two strands of filaments, at least one or both strand being a strand according to the first aspect of the invention.

According to some embodiments, the bundle may comprise three strands of filaments, at least one, two or all three strands being a strand according to the first aspect of the invention.

According to some embodiments, all strands may be strands according to the first aspect of the invention.

According to some embodiments, the bundle titer may be constant along the length of the bundle, the variation of the strand titer of one of the strands is compensated by a variation of the strand titer of at least one of the other strands of filaments.

According to some embodiments, the variation of the strand titer of one of the strands may be compensated by a variation of the strand titer of one of the other strands of filament.

According to some embodiments, the bundle comprises two strands according to the first aspect of the invention, the bundle titer is constant along the length of the bundle, the variation of the strand titer of one strand is compensated by a variation of the strand titer of the other strands.

According to some embodiments, the bundle comprises three strands according to the first aspect of the invention, the bundle titer is constant along the length of the bundle, the variation of the strand titer of one strand is compensated by a variation of the strand titer of one of the other two strands.

According to some embodiments, the bundle comprises three strands according to the first aspect of the invention, the bundle titer is constant along the length of the bundle, the variation of the strand titer of one strand is compensated by a variation of the strand titers of the other two strands.

According to some embodiments, the cross section of the filaments may differ between filaments of different strands, combined to one bundle.

According to some embodiments, the bundle titer may vary along the length of the bundle.

According to some embodiments, the color of the filaments of at least one of the strands may differ from the color of the filaments of the other strands.

According to some embodiments, the number of filaments per strand is equal for all strands in the bundle.

According to some embodiments, the filaments may be bulked continuous filaments.

According to some embodiments, for each filament, the crystallinity of the filaments of the bundle may be substantially uniform along the length, i.e. along the axis, of the filaments. According to some embodiments, along a cross section of the bundle, the crystallinity of the filaments of the bundle may be substantially uniform.

In the bundle, the filaments of the strands are varied in diameter, hence in titer.

According to some embodiments, in the bundle, each of said filaments may have an average filament titer in the range of 2 to 30 denier.

More preferred, the average filament titer is in the range of 3 to 16 denier.

According to a third aspect of the disclosure - not according to the invention-, a multifilament yarn is provided, the yarn comprising at least one strand according to the first aspect of the invention.

According to a fourth aspect of the disclosure, which is according to the present invention, a multifilament yarn is provided, the yarn comprising at least one multifilament bundle according to the claimed invention.

According to some embodiments, the yarn according to the third or fourth aspect may be a bulked continuous filament yarn.

According to some embodiments, the filaments of the bundle or bundles may be held together by air entangling at isolated locations along the length of the yarn, typically every 1 to 20 cm.

According to some embodiments, the yarn according to the third or fourth aspect may comprise at least two bundles according to the second aspect of the invention, the bundles being twined .

According to some embodiments, the yarn according to the third or fourth aspect may comprise bundles of filaments have identical average bundle titers.

Yarns according to the invention may be provided with particular characteristics. When strands with different colors are used, the bundles and by consequence the yarns may be provided with particular appearance where very locally along its length the color most visible at the outside of the bundle or yarn is the bundle of strand with the higher titer, while the appearance of the color of the other, thinner, filaments, is suppressed. According to a fifth aspect of the disclosure, a method to provide a strand of melt spun polymer filaments is provided, the method comprising the steps of
- Melting a polymer;
- Spinning said polymer into a strand of polymer filaments by pushing the molten polymer though a spin pack by means of a spin pump;
- Quenching the spun polymer filaments of the stand;
wherein the spin pump output is varied in function of time, causing each filament of said bundle having a filament titer, which varies along the length of the filament.

The output of the spin pump, expressed as liters per minute, may be varied over time by multiple measures, such as increasing or decreasing the pump pressure over time, changing the polymer viscosity and/or polymer temperature, etc. and any combination of such measures.

Additionally, different titers of filaments, hence of bundles may be provided by changing of gear inside the pump, changing the pump plates, the screens, plates inside the spin pack and/or the spinneret capillary may be altered. It is understood that different cross sections may be provided to the filaments, such as substantially rectangular, round, oval, tri- or multilobal and alike.

According to some embodiments, the spin pump output may be varied cyclically .

According to some embodiments, the spin pump output may be varied according to a sinusoidal function .

According to some embodiments, the spin pump output may be varied stepwise.

According to some embodiments, the spin pump output may be varied between a minimum output and a maximum output, said spin pump output having an average spun pump output, the difference between the minimum spin pump output and maximum spin pump output is in the range of 5 to 80 % of the average spin pump output.

The strands obtained by methods according this fourth aspect of the invention may be a strand according to the first aspect of the invention.

According to a sixth aspect - not according to the invention-, a method to provide a multifilament bundle of melt spun polymer filaments is provided, the method comprising the steps of
- Providing a first strand of melt spun polymer filaments according to the first aspect of the invention;
- Providing at least a second strand of melt spun filaments;
- Bundling said first and at least second strand into a bundle of melt spun polymer filaments;
- Elongating the filaments of the bundle, thereby reducing the titer of each of said filaments in the bundle.

Hence according to an aspect of the invention, a method to provide a multifilament bundle of melt spun polymer filaments is provided, the method comprising the steps of
- Providing a first strand of melt spun polymer filaments, the filaments having a longitudinal axis, the strand titer varying along said axis, each filament of said strand having a filament titer, which along said axis, varies with the strand titer, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer, by
   ∘ Melting a polymer;
   ∘ Spinning said polymer into a strand of polymer filaments by pushing the molten polymer though a spin pack by means of a spin pump;
   ∘ Quenching the spun polymer filaments of the stand;
   wherein the spin pump output is varied in function of time, causing each filament of said bundle having a filament titer, which varies along the length of the filament;
- Providing at least a second strand of melt spun filaments;
- Bundling said first and at least second strand into a bundle of melt spun polymer filaments;
- Elongating the filaments of the bundle, thereby reducing the titer of each of said filaments in the bundle.

The dyeability of the filaments of at least one of the strands differs from the dyeability of the filaments of the other strands

According to a seventh aspect of the disclosure, a method to provide a multifilament bundle of melt spun polymer filaments is provided, the method comprising the steps of
- Providing a first and at least a second strand of melt spun polymer filaments according to the third aspect of the invention;
- Bundling said first and at least second strand into a bundle of melt spun polymer filaments;
- Elongating the filaments of the bundle, thereby reducing the titer of each of said filaments in the bundle
wherein the sum of the spin pump output of the spin pump providing the first strand and the spin pump output of the spin pump providing the at least second strand is constant in time.

So according to an aspect of the invention a method to provide a multifilament bundle of melt spun polymer filaments is provided, the method comprising the steps of
- Providing a first and at least a second strand of melt spun polymer filaments, the filaments having a longitudinal axis, the strand titers varying along said axis, each filament of said strand having a filament titer, which along said axis, varies with the strand titer, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer, by, for each strand,
   ∘ Melting a polymer;
   ∘ Spinning said polymer into a strand of polymer filaments by pushing the molten polymer though a spin pack by means of a spin pump;
   ∘ Quenching the spun polymer filaments of the stand;
   wherein the spin pump output is varied in function of time, causing each filament of said bundle having a filament titer, which varies along the length of the filament;
- Bundling said first and at least second strand into a bundle of melt spun polymer filaments;
- Elongating the filaments of the bundle, thereby reducing the titer of each of said filaments in the bundle
wherein the sum of the spin pump output of the spin pump providing the first strand and the spin pump output of the spin pump providing the at least second strand is constant in time.

The dyeability of the filaments of at least one of the strands differs from the dyeability of the filaments of the other strands.

According to an eighth aspect of the disclosure, a method to provide a multifilament bundle of melt spun polymer filaments is provided, the method comprising the steps of
- Providing a plurality of strands of melt spun polymer filaments according to the third aspect of the invention;
- Bundling said strands into a bundle of melt spun polymer filaments;
- Elongating the filaments of the bundle, thereby reducing the titer of each of said filaments in the bundle
wherein the sum of the spin pump outputs of the spin pumps providing the plurality of strand is constant in time.

According to an aspect of the invention, a method to provide a multifilament bundle of melt spun polymer filaments is provided, the method comprising the steps of
- Providing a plurality of strands of melt spun polymer filaments the filaments having a longitudinal axis, the strand titers varying along said axis, each filament of said strand having a filament titer, which along said axis, varies with the strand titer, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer, by, for each strand,
   ∘ Melting a polymer;
   ∘ Spinning said polymer into a strand of polymer filaments by pushing the molten polymer though a spin pack by means of a spin pump;
   ∘ Quenching the spun polymer filaments of the stand;
   wherein the spin pump output is varied in function of time, causing each filament of said bundle having a filament titer, which varies along the length of the filament;
- Bundling said strands into a bundle of melt spun polymer filaments;
- Elongating the filaments of the bundle, thereby reducing the titer of each of said filaments in the bundle
wherein the sum of the spin pump outputs of the spin pumps providing the plurality of strand is constant in time.

The dyeability of the filaments of at least one of the strands differs from the dyeability of the filaments of the other strands.

According to some embodiments, of the invention, the method further comprises the step of bulking the bundle.

Bulking, also known as texturizing, the filaments can be done by any conventional texturizing means, such as but not restricted to gear wheels, false twist systems, stuffer boxes and alike.

The bundles obtained by the invention may be bundles according to the second aspect of the invention.

According to a ninth aspect of the invention, a method to provide a multifilament yarn is provided, the method comprising the steps of providing one or more bundles according to a method according to the invention, and air entangling the filaments at discrete positions along the length of the bundle to provide the yarn.

According to a tenth aspect of the invention method to provide a multifilament yarn is provided, the method comprising the steps of providing one or more bundles according to a method according to the invention, and twining the bundles to provide a yarn.

The yarns obtained by a method according this tenth aspect of the invention may be yarns according to the third or fourth aspect.

According to an eleventh aspect - not according to the invention -, a filament is provided, the filament having a varying titer along its length, i.e. along its axis, i.e. its longitudinal axis.

The crystallinity of the filament may be substantially uniform along the length, i.e. along its axis.

The filament according to the eleventh aspect may be part of a strand according to the first aspect of the invention, a bundle according to the invention or a yarn according to the invention.

According to the twelfth aspect of the invention, the use of a yarn according to the invention is used produce tufted, woven or knitted textile products.

According to some embodiments, the yarns may be used to provide the pile of a tufted carpet.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figure 1 is a schematically view of the production method of a bundle of melt spun filaments according to the invention.
Figure 2 is schematically view of the spin pump output of the pumps used in the method of figure 1.
Figure 3 shows schematically the cross sections of filaments present in a strand according to the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

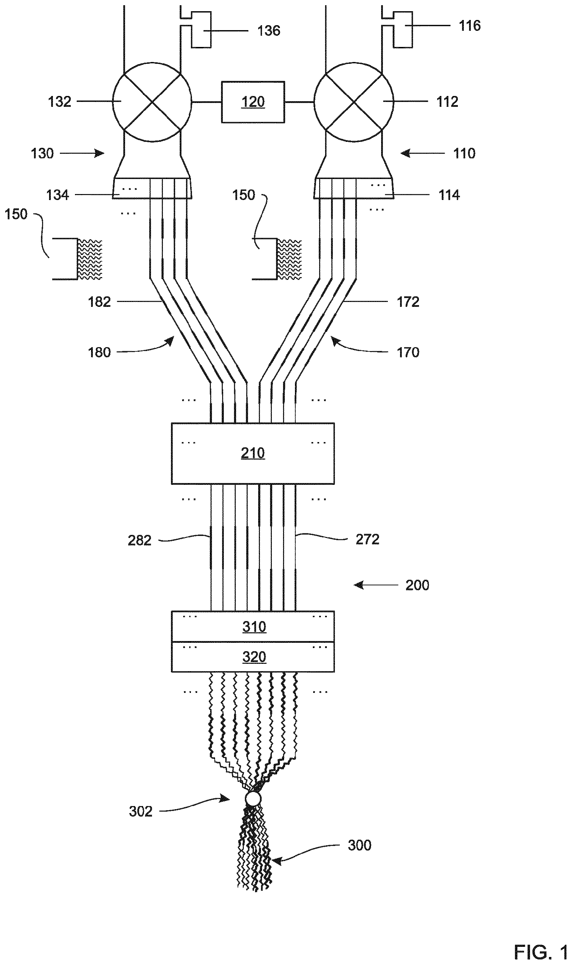

A process to provide a yarn according to the third aspect is shown in figure 1. As an example here, a yarn 300 comprising one bundle 200 according to the second aspect of the invention is provided, which bundle comprises two strands 170 and 180 of melt spun polymer filaments 172 and 182 according to the first.

Two spin packs 110 and 130 are shown, each of them comprising a spin pump 112 and 132, providing molten polymer to a spinneret 114 and 134. Each spin pack comprises also a dye pack 116 and 136 which provides the dye to the molten polymer. The ratio polymer/dye is kept unchanged with changing polymer volumes pumped through the corresponding spin pump.

A control device 120 controls, via the settings of the spin pumps 112 and 132, how much volume of polymer is spun through the spinnerets 114 and 134 per time unit. As shown in figure 1, the volume spun via spin pump 112 is stepwise but cyclically increased and decreased. In the meantime, and alternating with this variation in spun volume of pump 112, the volume spun via spin pump 132 is stepwise but also cyclically decreased and increased. The two variations are tuned to each other such that the total volume of polymer spun by the two spin pumps, remains substantially constant.

As a result, two strands of filaments according to the first aspect are spun out by the two spin packs. The number of filaments (N) per strand are equal. The strands are quenched by quenching means 150.

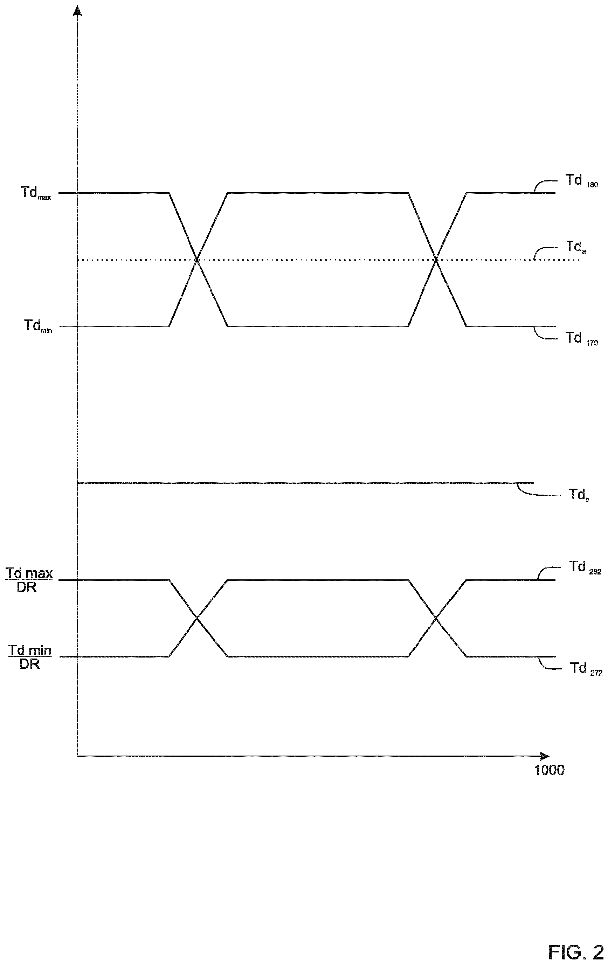

Each group of spun filaments, being the strands 170 and 180, have, along the axis of the strand, a cyclically stepwise varying titer Td170 and Td180. This is shown in figure 2.

The two strands 170 and 180 are combined and provide the bundle 200 according to the second aspect. All filaments 172 and 182 are extended and drawn at the same drawing ratio by a drawing installation 210, e.g. one or more sets of godets. In the drawn bundle, the filaments 272 are obtained by reduction of titer of filaments 172 via drawing installation 210. The filaments 282 are obtained by reduction of titer of filaments 182 via drawing installation 210.

So in the drawn bundle 200, along the axis of the strands, the filaments 272 respectively 282 have a cyclically stepwise varying titer Td272 respectively Td282. This is shown in figure 2.

After being drawn, the bundle 200 is texturized or "bulked" using a texturizing means 310, and at regular distances along the length of the bundle, the filaments are entangled into knot 302 using an air entangling means 320. As such a BCF yarn 300, being an example of a yarn according to the third aspect, is provided.

The titers (indicated in ordinate 1001) of various element are shown in figure 2. The filaments 170 and 180 have a titer along its length (indicated in abscissa 1000) a titer Td170 and Td180 which varies stepwise between the minimum value Tdmin and the maximum value Tdmax. The average titer of the filaments in the strand is indicated Tda.

The strand itself has a titer being the multiplication of the filament titer Td170 or Td180 with the number of filaments in the strand. Hence the strand titer also cyclically varies and the variation of the strand titer and the filament titers are proportional.

After the filaments are reduced in titer with a drawing ratio DR, the filaments 272 and 282 have a titer along its length being a titer Td272 and Td282 which varies stepwise between the minimum value Tdmin/DR and the maximum value Tdmax/DR.

The titer of the bundle 200 after drawing, and of the yarn 300 after texturizing and air entangling, is shown as Tdb, which equals "(N x (Td272 + Td282))/DR". Tdb is substantially identical along the length of the bundle or yarn .

As an example, polyamide is used to provide the two spin packs with molten polymer. In each spin pack, the polymer, molten to a temperature of 250 °C, is spun out through a spinneret with 75 spin openings. In the first spin pack, a blue colorant is added at a ratio of 3%. In the second spin pack, a green colorant is added at a ratio of 4%.

The filaments spun have cyclically, stepwise varying titer because the spin pumps are set to have a controlled, accordingly varying spin pump output. The titer of the spun filaments vary between +/- 40% denier. The spin pumps are synchronized such that the total volume of polymer spun by both pumps remain constant.

The two strands are combined to a bundle of two times 75 filaments from each strand, i.e. 150 filaments in the bundle, which bundle is drawn at a drawing ratio 2.5. The titer of the spun filaments vary between 12.1 and 5.2 denier, while the bundle titer is substantially constant at 1300. The bundle is texturized by most commonly air or steam and every 3 cm, a knot is provided by air entangling. This results in a BCF yarn with a titer of 1300 denier.

Because of the two distinct colors, the yarn has zones which show more green because in this section of the yarn, the green filaments of the one strand are thicker hence provide relatively a higher volume to the yarn in this section. The yarn has also zones which show more blue because in this section of the yarn, the blue filaments of the one strand are thicker hence provide relatively a higher volume to the yarn in this section.

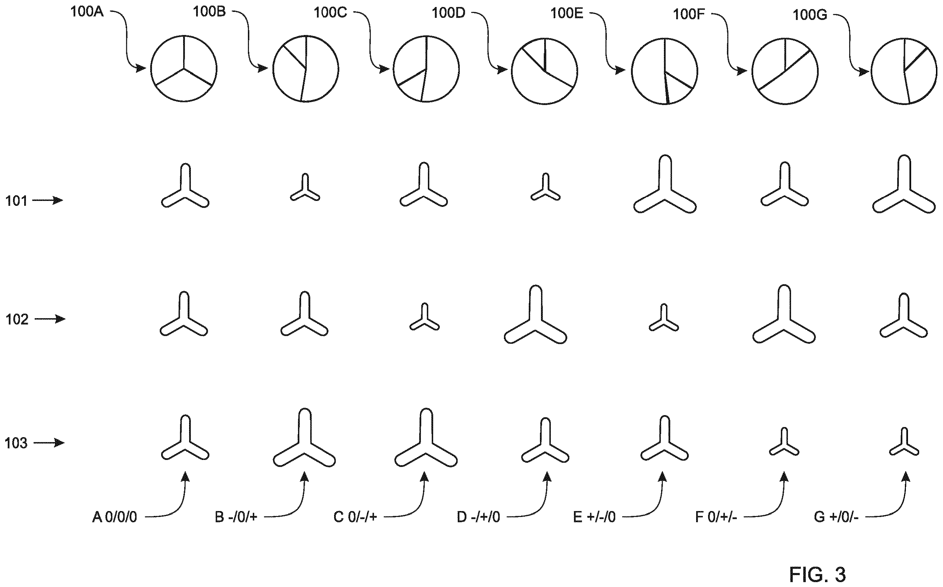

In figure 3, a schematically view of the possible variations of cross sections of the filament, strand and bundle is given according to the invention.

A multifilament bundle of three multifilament strands is made, each strand comprising 75 trilobal filaments of PA6. The cross section of one filament 101, 102 respectively 103 of each strand is shown in figure 2. The color of the filaments of the three strands are different. Filaments 101 are reddish in color, filaments 102 are yellowish, while filaments 103 are blueish.

At a first section A, the three strands all have filaments having the average filament titer. The volumetric amount of filaments present in each color is represented in the pie chart 100A. All colors are present in the same amount, providing the bundle a given brownish color.

In a second section B, the filament titer of strand 101 is reduced, while the titer of the filaments of the strand 103 is increased. The titer of filaments 102 remain as in section A. The average titer of the bundle remains constant and identical to the bundle titer at section A. As such, less polymer, hence color of strand 101 and more of strand 103 is present, resulting in a color at that position in the bundle having a higher color component of strand 103. At that position, the bundle has a color with a rather bluegreenish color.

In a second section C, the filament titer of strand 102 is reduced, while the titer of the filaments of the strand 103 is increased. The titer of filaments 101 remain as in section A. The average titer of the bundle remains constant and identical to the bundle titer at section A. As such, less polymer, hence color of strand 102 and more of strand 103 is present, resulting in a color at that position in the bundle having a higher color component of strand 103. At that position, the bundle has a color with a rather blueburgundy-like color.

In a similar way, in sections D to G, each time one filament titer is reduced while another is increased, causing a different color to be present for the bundle with a more red, blue or yellow color tone, while the average bundle titer remains substantially constant along the length of the bundle.

Along the whole length of the bundle, the bundle titer remains substantially constant, being the sum of the titers of the three times 75 filaments of the three strands.

Instead of bundles having a different color, bundles with different dyeability for one or more dyes can be combined in the very same way. Once the textile product (bundle, yarns, greige product, etc.) is dyed, the very same effect in color variation is obtained. It is to be understood that although preferred embodiments and/or materials have been discussed for providing embodiments according to the present invention, various modifications or changes may be made without departing from the scope of this invention.

## Claims

1. A multifilament bundle of melt spun polymer filaments, said bundle comprising at least two strands of filaments, wherein said bundle comprises at least one strand having a longitudinal axis, the strand titer varying along said axis, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer,
wherein the dyeability of the filaments of at least one of the strands differs from the dyeability of the filaments of the other strands.

2. A bundle according to claim 1, wherein all strands are strands having a longitudinal axis, the strand titer varying along said axis, each filament of said strand having a filament titer, which along said axis, varies with the strand titer.

3. A bundle according to claim 1 or 2, wherein the bundle titer is constant along the length of the bundle, the variation of the strand titer of one of the strands is compensated by a variation of the strand titer of at least one of the other strands of filaments.

4. A bundle according to claim 3, wherein the variation of the strand titer of one of the strands is compensated by a variation of the strand titer of one of the other strands of filament

5. A bundle according to any one of the claims 1 to 4, wherein the filaments are bulked continuous filaments.

6. A multifilament yarn comprising at least one bundle according to any one of the claims 1 to 5.

7. A method to provide a multifilament bundle of melt spun polymer filaments, the method comprising the steps of
• Providing a first strand of melt spun polymer filaments, the filaments having a longitudinal axis, the strand titer varying along said axis, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer, by
∘ Melting a polymer;
∘ Spinning said polymer into a strand of polymer filaments by pushing the molten polymer though a spin pack by means of a spin pump;
∘ Quenching the spun polymer filaments of the stand;
wherein the spin pump output is varied in function of time, causing each filament of said bundle having a filament titer, which varies along the length of the filament;
• Providing at least a second strand of melt spun filaments;
• Bundling said first and at least second strand into a bundle of melt spun polymer filaments;
• Elongating the filaments of the bundle, thereby reducing the titer of each of said filaments in the bundle;
wherein the dyeability of the filaments of at least one of the strands differs from the dyeability of the filaments of the other strands.

8. A method to provide a multifilament bundle of melt spun polymer filaments, the method comprising the steps of
• Providing a plurality of strands of melt spun polymer filaments the filaments having a longitudinal axis, the strand titers varying along said axis, said strand titer varying between a minimum strand titer and a maximum strand titer, the difference between the minimum strand titer and maximum strand titer is in the range of 5 to 80 % of the average strand titer and each filament of said strand having a filament titer, which along said axis, varies with the strand titer, by, for each strand,
∘ Melting a polymer;
∘ Spinning said polymer into a strand of polymer filaments by pushing the molten polymer though a spin pack by means of a spin pump;
∘ Quenching the spun polymer filaments of the stand;
wherein the spin pump output is varied in function of time, causing each filament of said bundle having a filament titer, which varies along the length of the filament;
• Bundling said strands into a bundle of melt spun polymer filaments;
• Elongating the filaments of the bundle, thereby reducing the titer of each of said filaments in the bundle
wherein the sum of the spin pump outputs of the spin pumps providing the plurality of strand is constant in time; preferably wherein said plurality of strands consists of two strands;
wherein the dyeability of the filaments of at least one of the strands differs from the dyeability of the filaments of the other strands.

9. A method according to any one of the claims 7 - 8, wherein the method further comprises the step of bulking the bundle.

## Patentansprüche

1. Multifilamentbündel aus schmelzgesponnenen Polymerfilamenten, wobei das oben genannte Bündel mindestens zwei Filamentstränge umfasst, wobei das oben genannte Bündel mindestens einen Strang umfasst, der eine Längsachse aufweist, wobei der Strangtiter entlang die oben genannte Achse variiert, wobei der oben genannte Strangtiter zwischen einem minimalen Strangtiter und einem maximalen Strangtiter variiert, wobei die Differenz zwischen dem minimalen Strangtiter und dem maximalen Strangtiter in dem Bereich von 5 bis 80 % des durchschnittlichen Strangtiters liegt und wobei jedes Filament des Stranges einen Filamenttiter aufweist, der entlang der oben genannten Achse mit dem Strangtiter variiert,
wobei sich die Färbbarkeit der Filamente von mindestens einem der Stränge von der Färbbarkeit der Filamente der anderen Stränge unterscheidet.

2. Bündel nach Anspruch 1, wobei alle Stränge Stränge sind, die eine Längsachse aufweisen, wobei der Strangtiter entlang der oben genannten Achse variiert, wobei jedes Filament des oben genannten Stranges einen Filamenttiter hat, der entlang der oben genannten Achse mit dem Strangtiter variiert.

3. Bündel nach Anspruch 1 oder 2, wobei der Bündeltiter über die Länge des Bündels konstant ist, wobei die Variation des Strangtiters eines der Stränge durch eine Variation des Strangtiters mindestens eines der anderen Filamentstränge kompensiert wird.

4. Bündel nach Anspruch 3, wobei die Variation des Strangtiters eines der Stränge durch eine Variation des Strangtiters eines der anderen Stränge des Filaments kompensiert wird.

5. Bündel nach einem der Ansprüche 1 bis 4, wobei die Filamente gebauschte Endlosfilamente sind.

6. Multifilamentgarn, das mindestens ein Bündel nach einem der Ansprüche 1 bis 5 umfasst.

7. Verfahren zur Herstellung eines Multifilamentbündels aus schmelzgesponnenen Polymerfilamenten, wobei das Verfahren die folgenden Schritte umfasst:
- das Bereitstellen eines ersten Stranges aus schmelzgesponnenen Polymerfilamenten, wobei die Filamente eine Längsachse aufweisen, wobei der Strangtiter entlang der oben genannten Achse variiert, wobei der oben genannte Strangtiter zwischen einem minimalen Strangtiter und einem maximalen Strangtiter variiert, wobei die Differenz zwischen dem minimalen Strangtiter und dem maximalen Strangtiter in dem Bereich von 5 bis 80 % des durchschnittlichen Strangtiters liegt, und wobei jedes Filament des oben genannten Stranges einen Filamenttiter aufweist, der entlang der oben genannten Achse mit dem Strangtiter variiert, durch
das Schmelzen eines Polymers;
das Spinnen des oben genannten Polymers zu einem Strang von Polymerfilamenten, indem das geschmolzene Polymer mit Hilfe einer Spinnpumpe durch ein Spinnpaket gedrückt wird;
das Abschrecken der gesponnenen Polymerfäden des Bündels;
wobei die Leistung der Spinnpumpe in Abhängigkeit von der Zeit variiert wird, was dazu führt, dass jedes Filament des oben genannten Bündels einen Filamenttiter aufweist, der entlang der Länge des Filaments variiert;
- das Bereitstellen mindestens eines zweiten Strangs aus schmelzgesponnenen Filamenten;
- das Bündeln des oben genannten ersten Strang und des mindestens zweiten Strang zu einem Bündel aus schmelzgesponnenen Polymerfilamenten;
- das Ausdehnen der Filamente des Bündels, wodurch der Titer jedes dieser oben genannten Filamente in dem Bündel verringert wird;
wobei sich die Färbbarkeit der Filamente von mindestens einem der Stränge von der Färbbarkeit der Filamente der anderen Stränge unterscheidet.

8. Verfahren zur Herstellung eines Multifilamentbündels aus schmelzgesponnenen Polymerfilamenten, wobei das Verfahren die folgenden Schritte umfasst:
- das Bereitstellen einer Vielzahl von Strängen aus schmelzgesponnenen Polymerfilamenten, wobei die Filamente eine Längsachse aufweisen, wobei die Strangtiter entlang der oben genannten Achse variieren, wobei der oben genannte Strangtiter zwischen einem minimalen Strangtiter und einem maximalen Strangtiter variiert, wobei die Differenz zwischen dem minimalen Strangtiter und dem maximalen Strangtiter in dem Bereich von 5 bis 80 % des durchschnittlichen Strangtiters liegt, und wobei jedes Filament des oben genannten Strangs einen Filamenttiter aufweist, der entlang der oben genannten Achse mit dem Strangtiter variiert, und zwar für jeden Strang,
das Schmelzen eines Polymers;
das Spinnen des oben genannten Polymers zu einem Strang von Polymerfilamenten, indem das geschmolzene Polymer mit Hilfe einer Spinnpumpe durch ein Spinnpaket gedrückt wird;
das Abschrecken der gesponnenen Polymerfäden des Bündels;
wobei die Leistung der Spinnpumpe in Abhängigkeit von der Zeit variiert wird, was dazu führt, dass jedes Filament des oben genannten Bündels einen Filamenttiter aufweist, der entlang der Länge des Filaments variiert;
- das Bündeln der oben genannten Stränge zu einem Bündel schmelzgesponnener Polymerfilamente;
- das Ausdehnen der Filamente des Bündels, wodurch der Titer jedes dieser oben genannten Filamente in dem Bündel verringert wird
wobei die Summe der Spinnpumpenleistungen der Spinnpumpen, die die Vielzahl von Strängen bereitstellen, zeitlich konstant ist; vorzugsweise wobei die oben genannte Vielzahl von Strängen aus zwei Strängen besteht;
wobei sich die Färbbarkeit der Filamente von mindestens einem der Stränge von der Färbbarkeit der Filamente der anderen Stränge unterscheidet.

9. Verfahren nach einem der Ansprüche 7 bis 8, wobei das Verfahren ferner den Schritt des Bauschen des Bündels umfasst.

## Revendications

1. Faisceau multifilamentaire constitué par des filaments polymères filés, le faisceau en question comprenant au moins deux brins constitués par des filaments ; dans lequel ledit faisceau comprend au moins un brin possédant un axe longitudinal ; dans lequel ledit titre de brin variant le long dudit axe, ledit titre de brin variant entre un titre de brin minimal et un titre de brin maximal, la différence entre le titre de brin minimal et le titre de brin maximal se situant dans la plage allant de 5 à 80 % du titre de brin moyen et chaque filament du brin en question possédant un titre de filament qui, le long dudit axe, varie avec le titre de brin ;
dans lequel l'aptitude à la coloration des filaments d'au moins un des brins diffère de l'aptitude à la coloration des filaments des autres brins.

2. Faisceau selon la revendication 1, dans lequel tous les brins représentent des brins possédant un axe longitudinal ; dans lequel le titre de brin varie le long de l'axe en question ; dans lequel chaque filament dudit brin possède un titre de filament qui, le long dudit axe, varie avec le titre de brin.

3. Faisceau selon la revendication 1 ou 2, dans lequel le titre de faisceau est constant sur la longueur du faisceau, la variation du titre de brin d'un des brins étant compensée par une variation du titre de brin d'au moins un des autres brins constitués par des filaments.

4. Faisceau selon la revendication 3, dans lequel la variation du titre de brin d'un des brins est compensée par une variation du titre de brin d'un des autres brins constitués par des filaments.

5. Faisceau selon l'une quelconque des revendications 1 à 4, dans lequel les filaments représentent des filaments continus gonflants.

6. Fil du type multifilaments qui comprend au moins faisceau selon l'une quelconque des revendications 1 à 5.

7. Procédé destiné à procurer un faisceau multifilamentaire de filaments polymères filés, le procédé comprenant les étapes dans lesquelles :
- on procure un premier brin constitué par des filaments polymères filés en fusion ; dans lequel les filaments possèdent un axe longitudinal ; dans lequel le titre de brin varie le long dudit axe, ledit titre de brin variant entre un titre de brin minimal et un titre de brin maximal, la différence entre le titre de brin minimal et le titre de brin maximal se situant dans la plage allant de 5 à 80% du titre de brin moyen ; et chaque filament du brin en question possède un titre de filament qui, le long dudit axe, varie avec le titre de brin, par le fait de :
- porter un polymère à fusion ;
- filer ledit polymère afin d'obtenir un brin constitué par des filaments polymères en poussant le polymère en fusion à travers un ensemble de filage au moyen d'une pompe de filage ;
- refroidir les filaments polymères filés du brin ;
dans lequel on fait varier le débit de la pompe de filage en fonction du temps, d'une manière telle que chaque filament dudit faisceau possède un titre de filament qui varie sur la longueur du filament ;
- on procure au moins un deuxième brin constitué par des filaments filés en fusion ;
- on transforme en faisceau ledit premier et au moins un deuxième brin pour obtenir un faisceau de filaments polymères filés en fusion ;
- on soumet les filaments du faisceau à un allongement, pour ainsi réduire le titre de chacun desdits filaments dans le faisceau ;
dans lequel l'aptitude à la coloration des filaments d'au moins un des brins diffère de l'aptitude à la coloration des filaments des autres brins.

8. Procédé destiné à procurer un faisceau multifilamentaire constitués par des filaments polymères filés en fusion, le procédé comprenant les étapes dans lesquelles :
- on procure un certain nombre de brins qui sont constitués par des filaments polymères filés en fusion ; dans lequel les filaments possèdent un axe longitudinal ; dans lequel le titre de brin varie le long dudit axe, ledit titre de brin variant entre un titre de brin minimal et un titre de brin maximal, la différence entre le titre de brin minimal et le titre de brin maximal se situant dans la plage allant de 5 à 80 % du titre de brin moyen et chaque filament du brin en question possédant un titre de filament qui, le long dudit axe, varie avec le titre de brin, par le fait que, pour chaque brin :
- on porte un polymère à fusion ;
- on file polymère en question afin d'obtenir un brin constitué par des filaments polymères en poussant le polymère en fusion à travers un ensemble de filage au moyen d'une pompe de filage ;
- on refroidit les filaments polymères filés du brin ;
dans lequel on fait varier le débit de la pompe de filage en fonction du temps, d'une manière telle que chaque filament dudit faisceau possède un titre de filament qui varie sur la longueur du filament ;
- on transforme en faisceau les brins en question pour obtenir un faisceau de filaments polymères filés en fusion ;
- on soumet les filaments du faisceau à un allongement, pour ainsi réduire le titre de chacun desdits filaments dans le faisceau ;
dans lequel la somme des débits de la pompe de filage qui fait partie des pompes de filage procurant lesdits plusieurs brins est constante dans le temps ; de préférence dans lequel lesdits plusieurs brins sont constitués par deux brins ;
dans lequel l'aptitude à la coloration des filaments d'au moins un des brins diffère de l'aptitude à la coloration des filaments des autres brins.

9. Procédé selon l'une quelconque des revendications 7 à 8, dans lequel le procédé comprend en outre l'étape au cours de laquelle on gonfle le faisceau.
